# EUROPEAN PATENT APPLICATION

(11) **EP 4 497 724 A1**
(43) Date of publication of application: **29.01.2025**
(21) Application number: 22933303.4
(22) Date of filing: 23.03.2022
(51) Int. Cl.: B82B 1/00

(54) **STRUCTURE AND MANUFACTURING METHOD OF STRUCTURE**

(71) Applicant: Sony Group Corporation, Tokyo 108-0075 (JP)
(72) Inventor: SAKAMOTO, Shigeru, Tokyo 108-0075 (JP)
(74) Representative: D Young & Co LLP
(86) International application number: PCT/JP2022/013448
(87) International publication number: WO 2023/181158

(57) **Abstract**

A structure according to an embodiment of the present disclosure includes integrated structural units in each of which multiple nanoparticles are coupled to each other in a beaded shape. A precipitated component of equal to or less than 1.0 wt% is obtainable by centrifugation performed for 10 minutes on a solution in which the structure is dissolved in tetrahydrofuran as a solvent, under conditions of a minimum rotation radius of 8.5 cm, a maximum rotation radius of 23.2 cm, and an angular velocity of 10000 rpm.

## Description

### Technical Field

The present disclosure relates to a structure using a nanoparticle, and a method of manufacturing the structure, for example.

### Background Art

For example, PTL 1 discloses a method of manufacturing a mesoporous silica porous film having improved handling property, leveling property, and uniform film formability at the time of film formation. Specifically, a sol of mesoporous silica nanoparticles coated with a nonionic surfactant and having a cationic surfactant in fine pores is prepared, and the nonionic surfactant encompassing the mesoporous silica nanoparticles in the sol is removed, or the nonionic surfactant and the cationic surfactant encompassed in the fine pores of the mesoporous silica nanoparticles are removed. Thereafter, the mesoporous silica nanoparticles are separated, and the mesoporous silica particles are dispersed in an organic solvent to adjust a dispersion solution by an ultrasonic dispersion method, and the dispersion solution is applied to a substrate and dried to obtain a mesoporous silica porous film.

### Citation List

### Patent Literature

PTL 1: Japanese Unexamined Patent Application Publication No. 2015-118345

### Summary of the Invention

Incidentally, it is desired to improve production yield of a porous structure.

It is desirable to provide a structure and a method of manufacturing a structure that make it possible to improve production yield.

A structure according to an embodiment of the present disclosure includes integrated structural units in each of which multiple nanoparticles are coupled to each other in a beaded shape. A precipitated component of equal to or less than 1.0 wt% is obtainable by centrifugation performed for 10 minutes on a solution in which the structure is dissolved in tetrahydrofuran as a solvent, under conditions of a minimum rotation radius of 8.5 cm, a maximum rotation radius of 23.2 cm, and an angular velocity of 10000 rpm.

A method of manufacturing a structure according to an embodiment of the present disclosure includes: surface-coating multiple nanoparticles by adding an amphipathic molecule or an organic silane molecule to a dispersion liquid in which the multiple nanoparticles are dispersed; synthesizing a nanoparticle-coupled body by coupling the multiple nanoparticles to each other via a cross-linking part including a cross-linking agent by further adding the cross-linking agent; and applying the dispersion liquid in which the nanoparticle-coupled body is dispersed on a substrate.

A heat insulating material according to an embodiment of the present disclosure includes the structure according to the embodiment of the present disclosure.

In the structure according to the embodiment of the present disclosure and the method of manufacturing the structure according to the embodiment of the present disclosure, the structure including the integrated structural units in each of which the multiple nanoparticles are coupled to each other in a beaded shape is formed. A precipitated component of equal to or less than 1.0 wt% is obtainable by centrifugation performed for 10 minutes on a solution in which the structure is dissolved in tetrahydrofuran as a solvent, under conditions of a minimum rotation radius of 8.5 cm, a maximum rotation radius of 23.2 cm, and an angular velocity of 10000 rpm. This makes it possible to re-dissolve the manufactured structure.

### Brief Description of Drawings

[FIG. 1] FIG. 1 is a schematic diagram illustrating an outline configuration of a structure according to an embodiment of the present disclosure.
[FIG. 2] FIG. 2 is a schematic diagram illustrating a portion of the structure illustrated in FIG. 1 enlarged.
[FIG. 3] FIG. 3 is a diagram illustrating an aspect of the structure illustrated in FIG. 1.
[FIG. 4A] FIG. 4A is a schematic diagram illustrating an example of a structure of a nanoparticle illustrated in FIG. 1.
[FIG. 4B] FIG. 4B is a schematic diagram illustrating another example of the structure of the nanoparticle illustrated in FIG. 1.
[FIG. 5A] FIG. 5A is a diagram illustrating a spatial arrangement of multiple nanoparticles in the structure.
[FIG. 5B] FIG. 5B is a diagram illustrating a spatial arrangement of the multiple nanoparticles in the structure.
[FIG. 5C] FIG. 5C is a diagram illustrating a spatial arrangement of the multiple nanoparticles in the structure.
[FIG. 5D] FIG. 5D is a diagram illustrating a spatial arrangement of the multiple nanoparticles in the structure.
[FIG. 6] FIG. 6 is a characteristic diagram illustrating a relationship among the spatial arrangement of the multiple nanoparticles in the structure, a particle diameter, and transmissivity.
[FIG. 7] FIG. 7 is a conceptual diagram in a case where a transmission electron microscope is used to capture an image of the structure according to the present embodiment.
[FIG. 8A] FIG. 8A is a schematic diagram illustrating an example of an aspect of coupling between nanoparticles in a case of using the nanoparticle illustrated in FIG. 4A.
[FIG. 8B] FIG. 8B is a schematic diagram illustrating another example of the aspect of coupling between nanoparticles in a case of using the nanoparticle illustrated in FIG. 4B.
[FIG. 9] FIG. 9 is a characteristic diagram illustrating a relationship between a particle diameter and a proportion of a precipitate.
[FIG. 10] FIG. 10 is a flowchart illustrating an example of manufacturing steps of the structure illustrated in FIG. 1.
[FIG. 11] FIG. 11 is a flowchart illustrating another example of manufacturing steps of the structure illustrated in FIG. 1.

### Modes for Carrying Out the Invention

In the following, description is given in detail of embodiments of the present technology with reference to the drawings. The following description is merely a specific example of the present disclosure, and the present disclosure should not be limited to the following aspects. Moreover, the present disclosure is not limited to arrangements, dimensions, dimensional ratios, and the like of each component illustrated in the drawings. It is to be noted that the description is given in the following order.
1. Embodiment (An example of a structure including integrated structural units in each of which multiple nanoparticles are coupled to each other in a beaded shape)
   1-1. Configuration of Structure
   1-2. Method of Manufacturing Structure
   1-3. Workings and Effects
2. Use Examples of Structure

### <1. Embodiment>

### (1-1. Configuration of Structure)

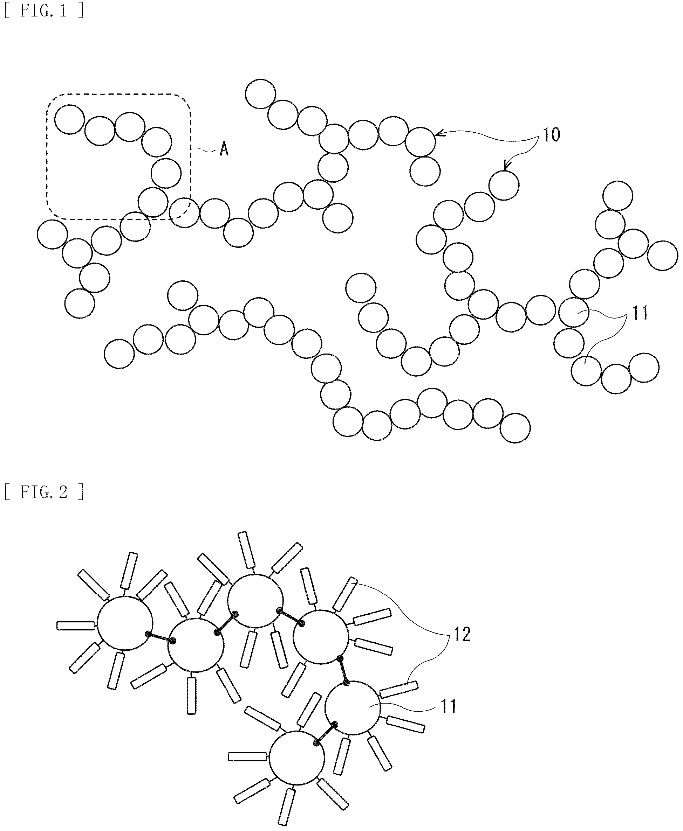

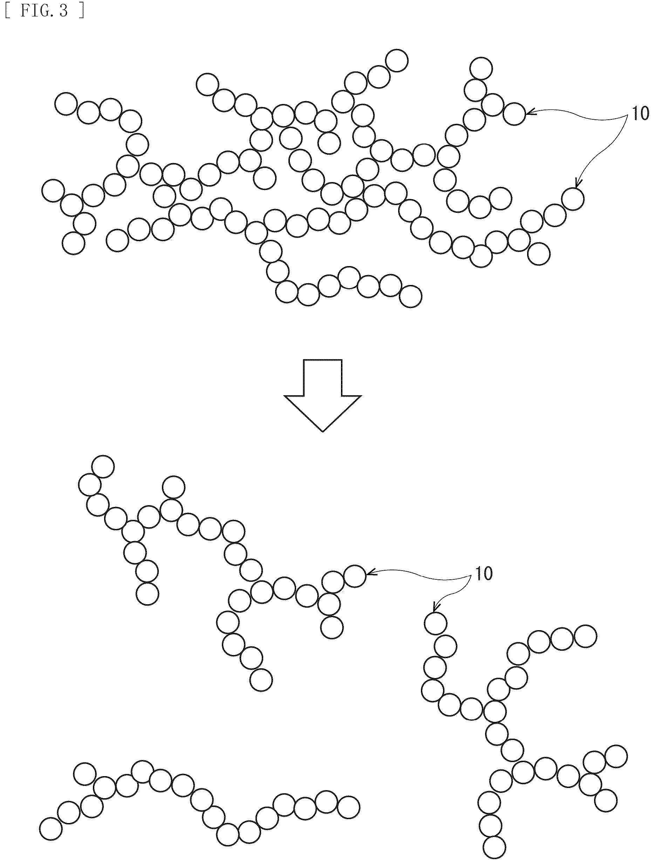

FIG. 1 schematically illustrates an example of an outline configuration of a structure (a structure 1) according to an embodiment of the present disclosure. FIG. 2 illustrates a portion of the structure illustrated in FIG. 1 enlarged. FIG. 3 illustrates an aspect of the structure illustrated in FIG. 1. The structure 1 is used, for example, as an antireflection film, a heat insulating material, a semiconductor material, an additive, or a catalyst. As illustrated in FIG. 3, the structure 1 of the present embodiment is a porous body that is soluble in a predetermined organic solvent and includes integrated structural units (coupled bodies 10) in each of which multiple nanoparticles 11 are coupled to each other in a beaded shape. Specifically, a precipitated component of equal to or less than 1.0 wt% is obtainable by centrifugation performed for 10 minutes on a solution in which the structure 1 is dissolved in tetrahydrofuran (THF) as a solvent, under conditions of a minimum rotation radius of 8.5 cm, a maximum rotation radius of 23.2 cm, and an angular velocity of 10000 rpm.

The multiple nanoparticles 11 are a complex oxide of metal atoms. Specifically, they are an oxide of zirconium (Zr), titanium (Ti), tin (Sn), silicon (Si), aluminum (Al), or zinc (Zn) having optical transparency. It is also possible to use an oxide of tungsten (W) or yttrium (Y) having optical transparency though being colored. Among those metal oxides described above, it is desirable to use, as the multiple nanoparticles 11, an Si oxide or an Al oxide having low refractive index and particularly high optical transparency.

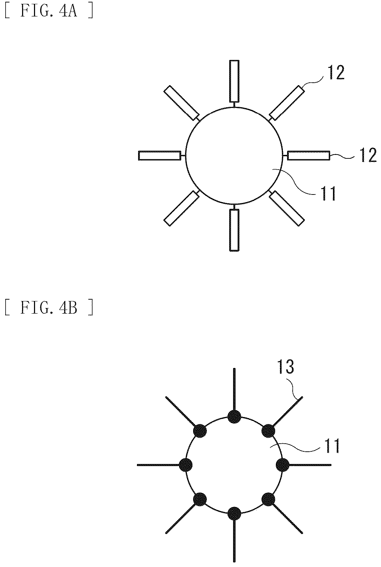

The multiple nanoparticles 11 are surface-coated with an amphipathic molecule 12, as illustrated in FIG. 4A, for example. Alternatively, the nanoparticle 11 is surface-deactivated by reacting with an organic silane molecule 13, as illustrated in FIG. 4B, for example. This brings the multiple nanoparticles 11 into a state of not being able to be covalently bonded to each other.

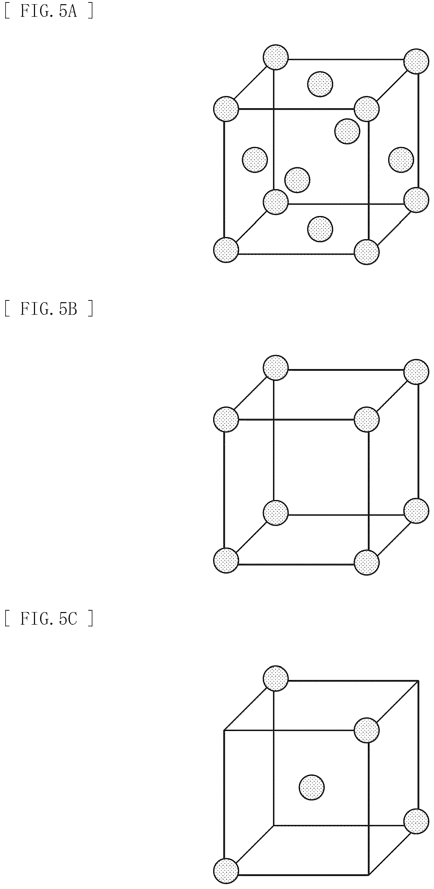

FIGs. 5A to 5D each illustrate a spatial arrangement that the multiple nanoparticles 11 may have in the structure 1. In the structure 1, each of the multiple nanoparticles 11 is, for example, covalently bonded to one to three nanoparticles 11 via a cross-linking part 21 described later.

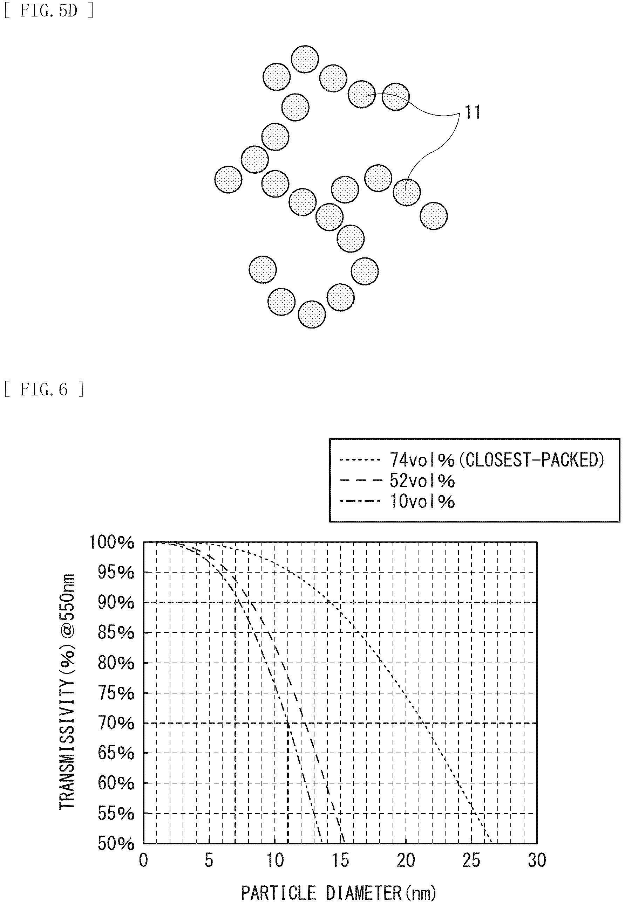

For example, in a cubic closest-packed structure illustrated in FIG. 5A, one nanoparticle 11 has 12 bonding points to other nanoparticles 11, and has a packing density of 74% by volume. In a simple cubic structure illustrated in FIG. 5B, one nanoparticle 11 has six bonding points to other nanoparticles 11, and has a packing density of 52% by volume. In a diamond structure illustrated in FIG. 5C, one nanoparticle 11 has four bonding points to other nanoparticles 11, and has a packing density of 34% by volume. In a chain structure or a meshed structure illustrated in FIG. 5D, one nanoparticle 11 has one to three bonding points to other nanoparticles 11, and has a packing density equal to or higher than 1% by volume and equal to or lower than 74% by volume. Among them, the multiple nanoparticles 11 included in the structure 1 are fixed to each other by each having four or more bonding points for bonding to each other, thus becoming insoluble in a predetermined solvent. Therefore, by taking into account re-solubility of the structure 1 in a solvent, it is desirable that the packing density of the multiple nanoparticles 11 be equal to or lower than 74% by volume, more preferably lower than 34% by volume.

Note that it is possible to measure the packing density by using a method described below.

The structure 1 serving as a target to be measured is first processed and thinned by a focused ion beam (FIB) method, for example. As preliminary processing of observing a transmission electron microscope (TEM) image of a cross section, described later, in a case where the FIB method is used, a carbon film and a tungsten thin film are formed as protective films. The carbon film is formed by an evaporation method on the surface of the structure 1. The tungsten thin film is formed by an evaporation method or a sputtering method on the surface of the structure 1. Through such thinning as described above, the cross section of the structure 1 is formed.

A transmission electron microscope (Tecnai G2 manufactured by FEI) is used to perform cross-sectional observation on the cross section of the obtained thin piece sample in such a manner that it is possible to observe the multiple nanoparticles 11 at an acceleration voltage of 200 kV and in a field of view of 50 nm × 50 nm, to thereby capture a TEM photograph. Note that an imaging position is selected at random on the thin piece sample, at which observation is performed in five fields of view, for example. Next, TEM-dedicated image analysis software, for example, is used to calculate a total area (the number of pixels) that the cross section of the nanoparticles occupies within one field of view, and calculate a ratio (a nanoparticle area ratio) of the whole area (the number of pixels) in the field of view. Next, nanoparticle area ratios described above are calculated in the five fields of view, and an arithmetic mean value of the nanoparticle area ratios is further calculated and is regarded as packing density.

The structure 1 preferably has predetermined light transmissivity. It is possible to use the structure 1 having a transmissivity of 70% or higher as an antireflection film for window glass of automobiles, for example. Alternatively, when the structure 1 has a transmissivity of 90% or higher, for example, it is possible to use the structure 1 for window glass of buildings, glass substrates, and alternative materials to plastic materials, for example.

FIG. 6 illustrates transmissivity with respect to a wavelength of 550 nm in a case where the structure 1 having a thickness of 1 mm is formed. In a case where the multiple nanoparticles 11 included in the structure 1 have a chain structure or a meshed structure representing a minimum density structure, for example, there may be a case where the multiple nanoparticles 11 are all present in a state of each having a primary particle diameter, and a case where secondary particles in which some of the multiple nanoparticles 11 aggregate with each other are included, as illustrated in FIG. 5B, for example. In the structure 1 having a low density structure, negative effects of light scattering due to such secondary particles are unignorable. Therefore, in a case where the multiple nanoparticles 11 have a chain structure or a meshed structure, a transmissivity of 70% is obtained if the primary particle diameter is equal to or smaller than 21 nm. In addition, in a case where the multiple nanoparticles 11 included in the structure 1 have a closest-packed structure, the multiple nanoparticles 11 having a primary particle diameter of equal to or smaller than 11 nm allows a transmissivity of 70% to be obtained. Further, a transmissivity of 90% is obtained if the primary particle diameter is equal to or smaller than 7 nm.

Note that the primary particle diameter of each of the nanoparticles 11 is acquired as described below.

The structure 1 serving as a target to be measured is first processed and thinned by a FIB method, for example. As preliminary processing of observing a TEM image of a cross section, described later, in a case where the FIB method is used, a carbon film and a tungsten thin film are formed as protective films. The carbon film is formed by an evaporation method on the surface of the structure 1. The tungsten thin film is formed by an evaporation method or a sputtering method on the surface of the structure 1. Through such thinning as described above, the cross section of the structure 1 is formed.

A transmission electron microscope (Tecnai G2 manufactured by FEI) is used to perform cross-sectional observation on the cross section of the obtained thin piece sample in such a manner that it is possible to observe the multiple nanoparticles 11 at an acceleration voltage of 200 kV and in a field of view of 50 nm × 50 nm, to thereby capture a TEM photograph. Note that an imaging position is selected at random on the thin piece sample.

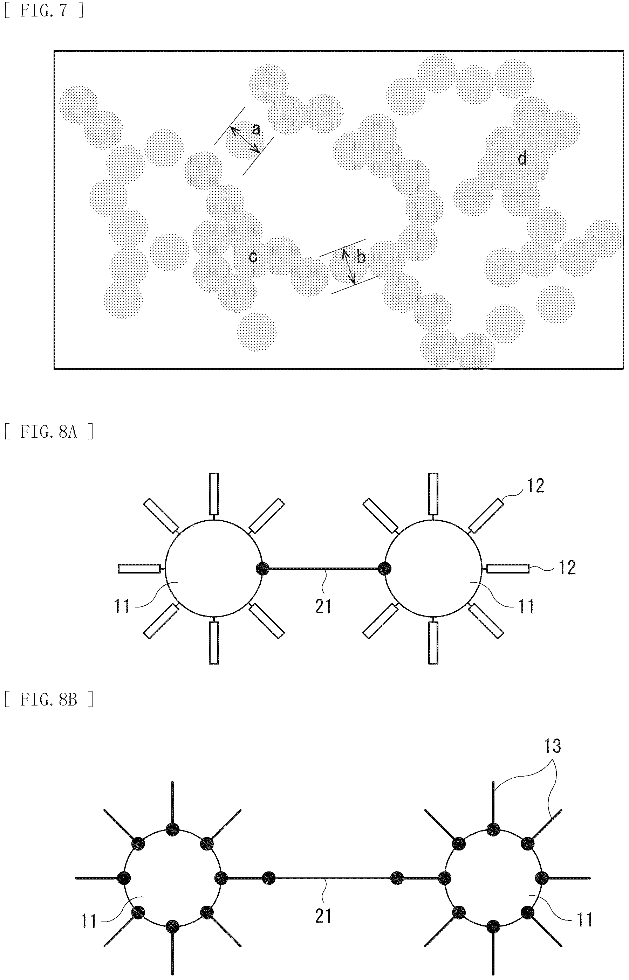

Next, 50 nanoparticles 11, for which it is possible to clearly confirm their diameters in a direction of an observation plane, are selected from the captured TEM photograph. In a case where the number of nanoparticles 11 that are present in one field of view, for which it is possible to clearly confirm their diameters, is below 50, 50 nanoparticles 11, for which it is possible to clearly confirm their diameters in the direction of the observation plane, are selected from multiple field of views. FIG. 7 is a conceptual diagram of a TEM photograph in a case where a transmission electron microscope is used to capture an image of the structure 1. In FIG. 7, for example, a nanoparticle a and a nanoparticle b, for which it is possible to clearly confirm their diameters, are selected. On the other hand, a nanoparticle c and a nanoparticle d, for example, are overlapping with other nanoparticles 11 in a depth direction of observation, for which it is not possible to confirm their shapes, and are not appropriate as targets to be measured. A maximum diameter of each of the selected 50 nanoparticles 11 is measured.

Here, the maximum diameter refers to a maximum distance among distances each between two parallel lines both drawn at all angles at which the lines are in contact with a contour of the nanoparticle 11 (i.e., a maximum Feret's diameter). To measure the maximum diameter (the maximum Feret's diameter), a diameter of a particle portion, excluding an alkoxy group or a reactive functional group modifying the surface of each of the nanoparticles 11, is measured. By acquiring a median of the 50 maximum diameters (the maximum Feret's diameters) acquired in this manner, the primary particle diameter (a mean particle diameter) of each of the nanoparticles 11 is obtained.

In the structure 1, as described above, the multiple nanoparticles 11 surface-coated with the amphipathic molecule 12 or the organic silane molecule 13 are coupled to each other via the cross-linking part 21 to form the coupled body 10.

The amphipathic molecule 12 is used to coat the surfaces of the nanoparticles 11 in order to prevent bonding between the multiple nanoparticles 11. Specific examples of the amphipathic molecule 12 include a surfactant molecule, an amino acid molecule, or a macromolecule such as a block copolymer of a phospholipid or polyalkylene glycol.

As with the amphipathic molecule 12, the organic silane molecule 13 is used to deactivate the surfaces of the nanoparticles 11 in order to prevent bonding between the multiple nanoparticles 11. The organic silane molecule 13 preferably forms a covalent bond with the nanoparticle 11 and includes a reactive functional group that forms a covalent bond with the cross-linking part 21. Examples of the reactive functional group include a vinyl group, a methacrylic group, an acrylic group, a glycidyl group, a mercapto group, an amino group, a hydrosilyl group, a hydroxyl group, a carboxyl group, a cyano group, an amino group, a cyano group, and the like. Examples of an organic silane compound including the above-mentioned reactive functional group include the one represented by the following general formula (1) or general formula (2).
[Chem. 1]

R¹_{X}Si(OR²)_{4-X} ... (1)

R¹_{X}SiCl_{4-X} ... (2)

(R¹ is any of a hydrogen atom, a vinyl group, an acryloxy group, a methacryloxy group, an aminopropyl group, a glycidoxypropyl group, and a mercaptopropyl group. R² is any of a methyl group, an ethyl group, a propyl group, and an isopropyl group. X is an integer of 3 or less.)

It is to be noted that presence or absence of the amphipathic molecule 12 and the organic silane molecule 13 coating the surface of the nanoparticle 11 and an aspect of the bonding between the nanoparticle 11 and the amphipathic molecule 12 or the organic silane molecule 13 are able to be confirmed, for example, by component analysis or composition analysis. Examples of the component analysis and the composition analysis include Fourier transform infrared spectroscopy analysis (FT-IR), gas chromatography analysis (GC), X-ray photoelectron spectroscopy (XPS), nuclear magnetic resonance analysis (NMR), and energy-dispersive X-ray analysis (EDX). The presence or absence of the amphipathic molecule 12 and the organic silane molecule 13 coating the surface of the nanoparticle 11 and the aspect of the boding between the nanoparticle 11 and the amphipathic molecule 12 or the organic silane molecule 13 are able to be analyzed using one or more of the above-mentioned analysis methods.

The cross-linking part 21 couples the multiple nanoparticles 11 to each other as described above. Specifically, the cross-linking part 21 is an organic matter or an inorganic matter covalently bonded directly to the nanoparticle 11, for example, as illustrated in FIG. 8A. Alternatively, the cross-linking part 21 is an organic matter or an inorganic matter covalently bonded indirectly to the nanoparticle 11 via an organosilyl group (organic silane molecule 13), for example, as illustrated in FIG. 8B. The cross-linking part 21 forms a covalent bond with one or two nanoparticles 11.

Examples of such a cross-linking part 21 include a cross-linking agent having two or more reactive points. Examples of a cross-linking agent that forms a covalent bond directly with the nanoparticle 11, among those mentioned above, include a silane compound represented by the following general formula (3), general formula (4), general formula (5), or general formula (6).
[Chem. 2]

R³_{Y}Si(OR⁴)_{4-Y} ... (3)

R³_{Y}SiCl_{4-Y} ... (4)

(R⁴O)_{3-Y}R³_{Y}Si-R⁵-SiR³_{Y}(OR⁴)_{3-Y} ... (5)

Cl_{3-Y}R³_{Y}Si-R⁵-SiR³_{Y}Cl_{3-Y} ... (6)

(R³ is any of a hydrogen atom, a methyl group, an ethyl group, a propyl group, an isopropyl group, and a phenyl group. R⁴ is any of a methyl group, an ethyl group, a propyl group, and an isopropyl group. R⁵ is any of a methylene group, an ethylene group, a propylene group, a butylene group, a pentylene group, a hexylene group, and a phenylene group. Y is an integer of 0 or 2 or less).

Examples of a cross-linking agent covalently bonded indirectly to the nanoparticle 11 via an organosilyl group (organic silane molecule 13) include those including two or more reactive functional groups that react with the functional group of the organic silane molecule 13. Examples of such a cross-linking agent include polyfunctional allyl (vinyl), polyfunctional thiol, polyfunctional (meth)acrylate, and polyfunctional glycidyl.

Specific examples of the polyfunctional allyl (vinyl) include diallyl ether, diallyl sulfide, diallyl amine, diallyl adipate, diallyl dimethyl silane, diallyl isophthalate, diallyl urea, dimethyl divinyl silane, divinyl tetramethyl disiloxane, hexadiene, tetraallyloxyethane, triallyl cyanurate, and triallyl amine.

Specific examples of the polyfunctional thiol include ethanedithiol, propanedithiol, hexanedithiol, pentaerythritol tetrakis(mercaptoacetate), pentaerythritol tetrakis(3-mercaptobutyrate), 1,4-bis(3-mercaptobutyryloxy)butane, 1,3,5-tris(2-(3-sulfanylbutanoyloxy)ethyl)-1,3,5-triazinane-2,4,6 trione, and trimethylolpropane tris(3-mercaptobutyrate).

Specific examples of the polyfunctional (meth)acrylate include diethylene glycol dimethacrylate, ethylene glycol dimethacrylate, tetraethylene glycol diacrylate, diethylene glycol diacrylate, trimethylolpropane triacrylate, trimethylolpropane trimethacrylate, pentaerythritol tetraacrylate, and pentaerythritol tetramethacrylate.

Specific examples of the polyfunctional glycidyl include a glycidyl ether type epoxy resin such as bisphenol A diglycidyl ether, bisphenol F diglycidyl ether, or resorcinol diglycidyl ether, phthalic acid diglycidyl ester and dimer acid diglycidyl ester, triglycidyl ether triphenylmethane, tetraglycidyl ether tetraphenyl ethane, bisphenol S diglycidyl ether, cresol novolac glycidyl ether, triglycidyl isocyanurate, and tetrabrom bisphenol A diglycidyl ether.

The structure 1 of the present embodiment is the porous body including the integrated structural units (coupled bodies 10) in each of which the multiple nanoparticles 11 are coupled to each other in a beaded shape. Each one of the multiple nanoparticles 11 is covalently bonded to one to three nanoparticles via the cross-linking part 21.

As illustrated in FIG. 3, the structure 1 includes, in a film, for example, the beaded coupled body 10 present in a state of being mutually entangled with another beaded coupled body 10, and has a large number of gaps therein due to steric hindrance. The entanglement between the beaded coupled bodies 10 is merely held by weak van der Waals force, and the structure 1 is able be dissolved in an appropriate solvent.

Here, being dissolved refers to a state in which the beaded coupled body 10 is mixed with another liquid to form a solution with a uniform phase, without causing precipitation or phase separation. The beaded coupled body 10 does not change in chemical state even in the solution, and the included beaded coupled bodies 10 are dispersed in the solvent in an individually separated state.

Specifically, in the structure 1 of the present embodiment, a precipitated component of equal to or less than 1.0 wt% is obtainable by centrifugation performed for 10 minutes on a solution in which the structure 1 is dissolved in tetrahydrofuran (THF) as a solvent, under conditions of a set temperature for centrifugation of 25°C, a minimum rotation radius of 8.5 cm, a maximum rotation radius of 23.2 cm, and an angular velocity of 10000 rpm.

Note that a weight of the precipitated component is measured by the following method. First, 1000 ml of a THF solution in which the structure 1 is dissolved is centrifuged using a high-capacity cooling centrifuge (Model 8730: Kubota Corporation) with a swing rotor RS-4000, for 10 minutes under the above conditions, following which a supernatant liquid is separated and a precipitate is taken out. Next, the precipitate is sufficiently dried by heating at 50°C for 1 hour. The weight of the precipitate is thereafter measured.

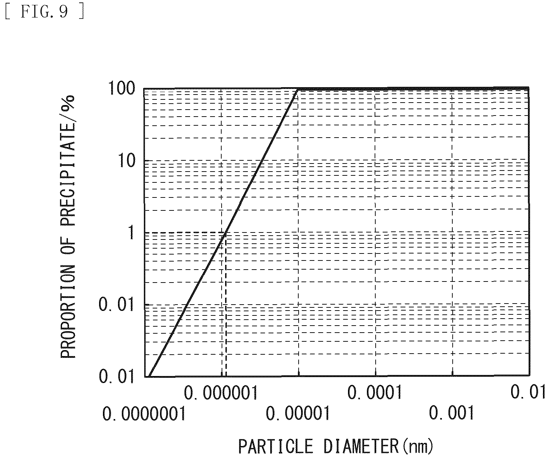

FIG. 9 illustrates a relationship between the particle diameter and a proportion of the precipitate, calculated from Stokes' law based on the following measurement conditions.

### [Measurement conditions]

Device: a high-capacity cooling centrifuge (Model 8730: Kubota Corporation) with a swing rotor RS-4000
Conditions: a sample volume of 1000 ml, a THF solvent, centrifugation for 10 minutes at a minimum rotation radius of 8.5 cm, a maximum rotation radius of 23.2 cm, and an angular velocity of 10000 rpm
Assumed sample: nanostructures ≤ 11 nm, a foreign matter of several µm to several tens of µm, and an insoluble component ≥ 100 µm

Under the above-described measurement conditions, if the particle diameters of the multiple nanoparticles 11 included in the structure 1 are equal to or smaller than 11 nm, the structure 1 is uniformly dispersed in the solvent, and it is thus possible to assume a settling rate substantially the same as that of the nanoparticles. The foreign matter is assumed to be a foreign matter during manufacture including the same component as the multiple nanoparticles 11 included in the structure 1. The insoluble component is assumed to be a component that does not dissolve in the THF solvent.

In a case where the particles of 11 nm or smaller are dissolved as in FIG. 9, the proportion of the precipitated component is found to be 1% or less under these conditions. In a case where the nanostructures are a component insoluble in the YHF solvent, all the nanostructures precipitate under these conditions, and the above proportion is thus not satisfied. In addition, the foreign matter of several µm to several tens of µm generated during manufacture is removable by this centrifugation operation.

### (1-2. Method of Manufacturing Structure)

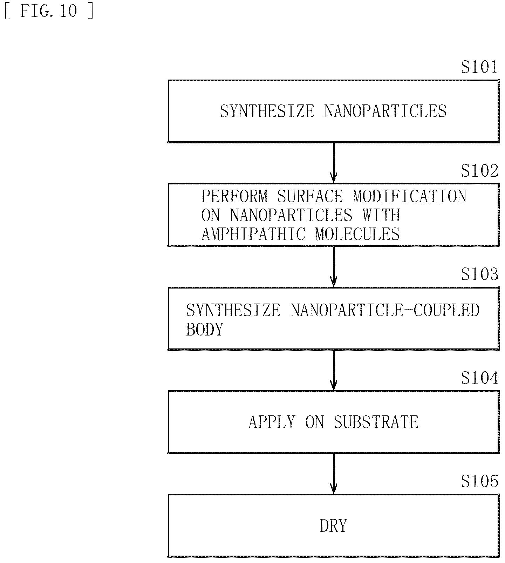

FIG. 10 illustrates a flow of an example of manufacturing steps of the structure 1. Hereinafter, description is given first of a method of manufacturing the structure 1 in which multiple nanoparticles 11 surface-coated with the amphipathic molecule 12 are coupled to each other by the cross-linking parts 21.

### (Method of Manufacturing Structure Using Multiple Nanoparticles Surface-Coated with Amphipathic Molecule)

First, the multiple nanoparticles 11 are synthesized using a liquid phase method (step S101). In general, a method of manufacturing nanoparticles is roughly classified into two types: a gas phase method and a liquid phase method. A fine nanoparticle 11 having a diameter of 10 nm or smaller is able to be isolated without causing aggregation by using the liquid phase method. As a precursor for the liquid phase method, it is possible to select a metal alkoxide molecule represented by the following general formula (7), which makes it possible to form a three-dimensional metal oxide skeleton (M-O-M) through a hydrolysis reaction and a condensation polymerization reaction. The metal alkoxide molecules may be the molecules in which some of alkoxy groups are substituted by non-hydrolysis functional groups, which does not interfere with formation of a metal oxide skeleton. After the above-described precursor is dissolved in water or an organic solvent, acidity or basicity of pH of the solution is adjusted. This causes a polymerization reaction to start to form metal oxide nanoparticles (nanoparticles 11).
[Chem. 3]

R⁶_{Z}M(OR⁷)_{4-Z} ... (7)

(R⁶ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, a phenyl group, an acryloxy group, a methacryloxy group, an aminopropyl group, a glycidoxypropyl group, and a mercaptopropyl group. R⁷ is any of a hydrogen atom, a methyl group, an ethyl group, a propyl group, and an isopropyl group. M is any of Si, Al, Ti, Sn, and Zn. Z is an integer of 0 or 2 or less.)

Note that, as long as a final diameter of each of the nanoparticles 11 is equal to or smaller than 11 nm, the manufacturing method is not limited to that described above. Some reference literatures are exemplified below. For example, Literature 1 (T. Yokoi et al. Chem. Mater. 2009, 21, 3719-3729) reports formation of a silica nanoparticle having a diameter of 8 nm in an aqueous solution in the presence of an amino acid, in which the nanoparticle is surface-coated with an amino acid molecule, thereby enabling isolation without causing aggregation. Literature 2 (S. Sakamoto et al. Langmuir 2018, 34, 1711-1717) reports formation of a silica nanoparticle and a titanium oxide nanoparticle having a diameter of 3 nm by using an inverted micellar liquid crystal phase as a template, in which the nanoparticle is surface-coated with surfactant molecules, thereby enabling isolation of the nanoparticles without causing aggregation thereof.

Next, the multiple nanoparticles 11 are dispersed in a solvent to perform surface modification (step S102). For example, a surfactant molecule, an amino acid molecule, or a macromolecule is added, as the amphipathic molecule 12, to a dispersion liquid in which the multiple nanoparticles 11 are dispersed. The added surfactant molecule, amino acid molecule, or macromolecule is adsorbed on the surface of the nanoparticle 11 to serve to prevent the aggregation of the nanoparticles. By a manufacturing method as in the above-mentioned Literatures 1 and 2, the nanoparticle 11 surface-coated with the surfactant molecule, amino acid molecule, or macromolecule is obtained. In such a case, the addition of the amphipathic molecule 12 is omitted. In addition, surfaces of the multiple nanoparticles 11 may be further modified with an organic silane compound as needed.

Next, a cross-linking agent (silane compound) is used to cross-link the nanoparticles 11 together to synthesize a nanoparticle-coupled body (step S103). The above-described silane compound having two or more reactive points is added as a cross-linking agent to the dispersion liquid in which the nanoparticles 11 are dispersed, with each surface being coated with the amphipathic molecule 12 such as a surfactant molecule, an amino acid molecule, or a macromolecule. The amount of the silane compound to be added is an amount by which one to three nanoparticles 11 are bonded to one nanoparticle 11. After the addition of the silane compound, the dispersion liquid is heated as needed. Thus, in the dispersion liquid, a cross-linking reaction of the nanoparticle 11 proceeds to form the beaded nanoparticle-coupled body. The dispersion liquid keeps a solution state without losing its fluidity.

Thereafter, the dispersion liquid is applied on a substrate (step S104) and thereafter dried to obtain the structure 1 (step S105). Examples of methods for drying and removing the solvent include drying at an elevated temperature under normal pressure. In a case where there is a concern that the structure 1 disintegrates due to interfacial tension during drying, it is preferable to use a supercritical drying method or a freeze-drying method. In the present embodiment, the surface of each of the multiple nanoparticles 11, which is a cause of large interfacial tension, is deactivated by being coated with the amphipathic molecule 12. Therefore, the structure 1 is less likely to disintegrate during drying than in a case where the surface is not coated. The structure 1 in a porous film form, for example, is thus obtained.

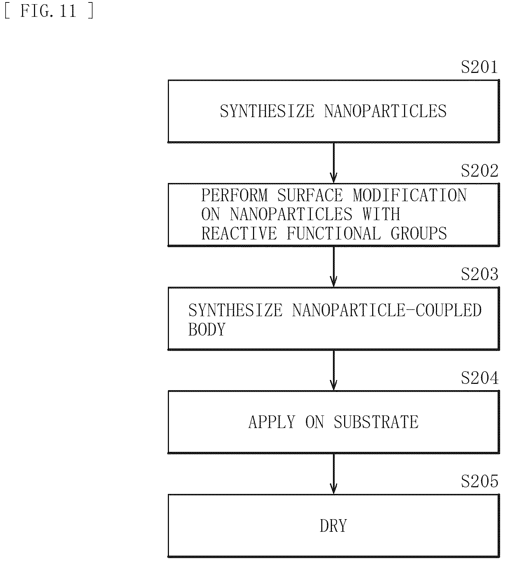

FIG. 11 illustrates a flow of another example of manufacturing steps of the structure 1. In the following, description is given of a method of manufacturing the structure 1 in which multiple nanoparticles 11 surface-coated with the organic silane molecule 13 are coupled to each other by the cross-linking parts 21.

### (Method of Manufacturing Structure Using Multiple Nanoparticles Surface-Coated with Organic Silane Molecule)

First, in the same manner as the above-described nanoparticles 11 surface-coated with the amphipathic molecule 12, the multiple nanoparticles 11 are synthesized by the liquid phase method (step S201). Next, the multiple nanoparticles 11 are dispersed in a solvent to perform surface modification (step S202). Here, instead of the amphipathic molecule 12, the organic silane compound (silane coupling agent) represented by the above general formula (1) or general formula (2) is added to the dispersion liquid. After the addition of the silane coupling agent, heating is performed as needed. This causes the nanoparticle 11 and the organic silane molecule 13 to react with each other to form a covalent bond, thus deactivating the surface of the nanoparticle 11 and preventing aggregation of the nanoparticles 11.

Note that, in the cross-linking reaction in next step S203, not all the reactive functional groups modifying the surfaces of the multiple nanoparticles 11 are used for cross-linking. Therefore, an organic metal compound without a reactive functional group, represented by the following general formula (8) or general formula (9), may be partially used, instead of the organic silane compound represented by the general formula (1) or general formula (2).
[Chem. 4]

R⁸_{X}M(OR⁹)_{4-X} ... (8)

R⁸_{X}MCl_{4-X} ... (9)

(R⁸ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, and a phenyl group. R⁹ is any of a methyl group, an ethyl group, a propyl group, and an isopropyl group. M is any of Si, Al, Ti, Sn, and Zn. X is an integer of 3 or less.)

Next, the nanoparticles 11 are cross-linked using a cross-linking agent including two or more reactive functional groups to synthesize a nanoparticle-coupled body (step S203). A silane compound such as the above-described polyfunctional allyl (vinyl), polyfunctional thiol, polyfunctional (meth)acrylate, or polyfunctional glycidyl is added as the cross-linking agent to the dispersion liquid in which the nanoparticles 11 are dispersed, with each surface being coated with the organic silane molecule 13. After the addition of the silane compound, heating or light irradiation is performed as needed. Thus, in the dispersion liquid, a cross-linking reaction proceeds via the cross-linking agent between the functional groups of the organic silane molecules 13 surface-modifying the respective multiple nanoparticles 11, to form the beaded nanoparticle-coupled body. The dispersion liquid keeps a solution state without losing its fluidity. In a case where the cross-linking reaction is an organic reaction such as a radical reaction, cationic polymerization, or anionic polymerization, an appropriate reaction initiator may be added.

Thereafter, in the same manner as the above-described nanoparticles 11 surface-coated with the amphipathic molecule 12, the dispersion liquid is applied on a substrate (step S204) and thereafter dried to obtain the structure 1 (step S205). The structure 1 in a porous film form, for example, is thus obtained.

Note that whether, as described above, each one of the multiple nanoparticles 11 included in the structure 1 has one to three bonding points to other nanoparticles 11, and the multiple nanoparticles 11 have the packing density of equal to or lower than 74% by volume, more preferably lower than 34% by volume, may be determined by capturing an image using a transmission electron microscope (for example, see FIG. 7). In a case where an image is captured using a transmission electron microscope, it is possible to determine that particles close to each other are cross-linked to each other, because an additive component including an organic matter such as resin is invisible.

### (1-3.Workings and Effects)

Formed as the structure 1 of the present embodiment is the porous body including the multiple nanoparticles 11 coupled to each other in a beaded shape. A precipitated component of equal to or less than 1.0 wt% is obtainable by centrifugation performed for 10 minutes on a solution in which the structure 1 is dissolved in THF as a solvent, under conditions of a minimum rotation radius of 8.5 cm, a maximum rotation radius of 23.2 cm, and an angular velocity of 10000 rpm. This will be described below.

A porous body may be used in a variety of applications because of its properties such as low refractive index, low dielectric constant, high thermal insulation, high specific surface area, and moisture absorption and deodorization. Typical use examples of the porous body include activated carbon including carbon and silica gel including silica. However, the porous body may be synthesized using another metal oxide, and have a sparse structure including coupled microparticles, a structure having a tunnel-shaped through hole formed in a bulk, or a structure including a three-dimensional network of ordered molecular skeletons. Porous bodies are classified into three types depending on their pore sizes, for example, micropores (to 2 nm), mesopores (2 nm to 50 nm), and macropores (from 50 nm).

Atypical porous body is synthesized in a solution in a batch manner, and the obtained porous body is in a bulk or powder form. However, the porous body thus obtained is difficult to form a film on an object or is opaque, thus being limited in applications.

In view of this, for example, a method of manufacturing a mesoporous silica porous film having improved handling property, leveling property, and uniform film formability at the time of film formation, by applying a dispersion liquid of mesoporous silica nanoparticles, has been developed as described above. However, the porous film formed by the above method is solidified at the same time as the film formation and becomes unable to be re-dissolved. This causes an issue of a decrease in production yield due to a device malfunction or mixture of a foreign matter during manufacture.

Formed as the structure 1 of the present embodiment is, for example, the porous body including the integrated coupled bodies 10 in each of which the multiple nanoparticles 11 are coupled to each other in a beaded shape. Each one of the multiple nanoparticles 11 is covalently bonded to one to three nanoparticles via the cross-linking part 21. A precipitated component of equal to or less than 1.0 wt% is obtainable by centrifugation performed for 10 minutes on a solution in which the structure 1 is dissolved in THF as a solvent, under conditions of a minimum rotation radius of 8.5 cm, a maximum rotation radius of 23.2 cm, and an angular velocity of 10000 rpm. This makes it possible to re-dissolve the manufactured structure 1.

As a result, even in a case where a foreign matter is mixed due to a device malfunction or the like during manufacture, the structure 1 of the present embodiment makes it possible to improve the production yield by going through a predetermined removal step after re-dissolution.

In addition, in the structure 1 of the present embodiment, an oxide metal oxide of zirconium (Zr), titanium (Ti), tin (Sn), silicon (Si), aluminum (Al), zinc (Zn), or the like having optical transparency is used as the multiple nanoparticles 11. This allows for use in a wide variety of fields, including an optical part such as an antireflection film or a lens.

### <2. Use Examples of Structure>

It is possible to use the structure 1 according to the embodiment described above in various cases as described below, for example.

The structure 1 may be used as, for example, an antireflection film of a television, a lens, a window, or the like. The structure 1 may be used as, for example, a heat insulating material of a building material, an electric appliance, a bathtub, or the like. The structure 1 may be used as, for example, a semiconductor material. The structure 1 may be used as, for example, an additive of clothes, wallpaper, a filter, or the like. The structure 1 may be used as, for example, a catalyst of a chemical product, a filter, or the like.

Although the present disclosure has been described with reference to the embodiment and the use examples, the present disclosure is not limited to the embodiment and the use examples described above, but may be modified in a wide variety of ways.

Note that the effects described in the specification are mere examples. The effects are not limited to the effects described in the specification. There may be any other effects than those described herein.

It is to be noted that the present technology may also have the following configurations. According to the present technology of the following configurations, the structure including the integrated structural units in each of which the multiple nanoparticles are coupled to each other in a beaded shape is formed. A precipitated component of equal to or less than 1.0 wt% is obtainable by centrifugation performed for 10 minutes on a solution in which the structure is dissolved in tetrahydrofuran as a solvent, under conditions of a minimum rotation radius of 8.5 cm, a maximum rotation radius of 23.2 cm, and an angular velocity of 10000 rpm. This makes it possible to re-dissolve the manufactured structure. Thus, it is possible to improve the production yield.
(1) A structure including integrated structural units in each of which multiple nanoparticles are coupled to each other in a beaded shape, in which
   a precipitated component of equal to or less than 1.0 wt% is obtainable by centrifugation performed for 10 minutes on a solution in which the structure is dissolved in tetrahydrofuran as a solvent, under conditions of a minimum rotation radius of 8.5 cm, a maximum rotation radius of 23.2 cm, and an angular velocity of 10000 rpm.
(2) The structure according to (1), in which the multiple nanoparticles have surfaces having multiple cross-linking parts, and the multiple nanoparticles are coupled to each other via the cross-linking parts.
(3) The structure according to (1) or (2), in which each of the multiple nanoparticles is coupled to equal to or more than one and equal to or less than three of the nanoparticles.
(4) The structure according to any one of (1) to (3), in which the multiple nanoparticles have surfaces having multiple cross-linking parts, and the multiple nanoparticles are covalently bonded to each other via the cross-linking parts.
(5) The structure according to any one of (1) to (4), in which packing density of the multiple nanoparticles is equal to or lower than 74% by volume.
(6) The structure according to any one of (1) to (4), in which packing density of the multiple nanoparticles is lower than 34% by volume.
(7) The structure according to any one of (1) to (6), in which a primary particle diameter of each of the multiple nanoparticles is equal to or smaller than 11 nm.
(8) The structure according to any one of (1) to (6), in which a primary particle diameter of each of the multiple nanoparticles is equal to or smaller than 7 nm.
(9) The structure according to any one of (1) to (), in which the cross-linking part includes an organic matter or an inorganic matter covalently bonded directly to each of the multiple nanoparticles.
(10) The structure according to any one of (2) to (9), in which the cross-linking part includes an organic matter or an inorganic matter covalently bonded to each of the multiple nanoparticles via a silyl group.
(11) The structure according to any one of (2) to (10), in which a surface of each of the multiple nanoparticles to which the cross-linking part is not bonded is coated with an amphipathic molecule.
(12) The structure according to (11), in which the amphipathic molecule includes a surfactant molecule, an amino acid molecule, or a macromolecule.
(13) The structure according to (12), in which the macromolecule includes a block copolymer of a phospholipid or polyalkylene glycol.
(14) The structure according to any one of (2) to (13), in which a surface of each of the multiple nanoparticles to which the cross-linking part is not bonded is deactivated by an organic silane compound.
(15) The structure according to any one of (1) to (14), in which each of the multiple nanoparticles includes a metal oxide.
(16) The structure according to any one of (1) to (15), in which each of the multiple nanoparticles includes an oxide of zirconium, titanium, tin, silicon, aluminum, or zinc.
(17) The structure according to any one of (1) to (16), in which each of the multiple nanoparticles includes an oxide of silicon or aluminum.
(18) A method of manufacturing a structure, the method including:
   surface-coating multiple nanoparticles by adding an amphipathic molecule or an organic silane molecule to a dispersion liquid in which the multiple nanoparticles are dispersed;
   synthesizing a nanoparticle-coupled body by coupling the multiple nanoparticles to each other via a cross-linking part including a cross-linking agent by further adding the cross-linking agent; and
   applying the dispersion liquid in which the nanoparticle-coupled body is dispersed on a substrate.

## Claims

1. A structure comprising integrated structural units in each of which multiple nanoparticles are coupled to each other in a beaded shape, wherein
a precipitated component of equal to or less than 1.0 wt% is obtainable by centrifugation performed for 10 minutes on a solution in which the structure is dissolved in tetrahydrofuran as a solvent, under conditions of a minimum rotation radius of 8.5 cm, a maximum rotation radius of 23.2 cm, and an angular velocity of 10000 rpm.

2. The structure according to claim 1, wherein the multiple nanoparticles have surfaces having multiple cross-linking parts, and the multiple nanoparticles are coupled to each other via the cross-linking parts.

3. The structure according to claim 1, wherein each of the multiple nanoparticles is coupled to equal to or more than one and equal to or less than three of the nanoparticles.

4. The structure according to claim 1, wherein the multiple nanoparticles have surfaces having multiple cross-linking parts, and the multiple nanoparticles are covalently bonded to each other via the cross-linking parts.

5. The structure according to claim 1, wherein packing density of the multiple nanoparticles is equal to or lower than 74% by volume.

6. The structure according to claim 1, wherein packing density of the multiple nanoparticles is lower than 34% by volume.

7. The structure according to claim 1, wherein a primary particle diameter of each of the multiple nanoparticles is equal to or smaller than 11 nm.

8. The structure according to claim 1, wherein a primary particle diameter of each of the multiple nanoparticles is equal to or smaller than 7 nm.

9. The structure according to claim 2, wherein the cross-linking part comprises an organic matter or an inorganic matter covalently bonded directly to each of the multiple nanoparticles.

10. The structure according to claim 2, wherein the cross-linking part comprises an organic matter or an inorganic matter covalently bonded to each of the multiple nanoparticles via a silyl group.

11. The structure according to claim 2, wherein a surface of each of the multiple nanoparticles to which the cross-linking part is not bonded is coated with an amphipathic molecule.

12. The structure according to claim 11, wherein the amphipathic molecule comprises a surfactant molecule, an amino acid molecule, or a macromolecule.

13. The structure according to claim 12, wherein the macromolecule comprises a block copolymer of a phospholipid or polyalkylene glycol.

14. The structure according to claim 2, wherein a surface of each of the multiple nanoparticles to which the cross-linking part is not bonded is deactivated by an organic silane compound.

15. The structure according to claim 1, wherein each of the multiple nanoparticles comprises a metal oxide.

16. The structure according to claim 1, wherein each of the multiple nanoparticles comprises an oxide of zirconium, titanium, tin, silicon, aluminum, or zinc.

17. The structure according to claim 1, wherein each of the multiple nanoparticles comprises an oxide of silicon or aluminum.

18. A method of manufacturing a structure, the method comprising:
surface-coating multiple nanoparticles by adding an amphipathic molecule or an organic silane molecule to a dispersion liquid in which the multiple nanoparticles are dispersed;
synthesizing a nanoparticle-coupled body by coupling the multiple nanoparticles to each other via a cross-linking part including a cross-linking agent by further adding the cross-linking agent; and
applying the dispersion liquid in which the nanoparticle-coupled body is dispersed on a substrate.
